# EUROPÄISCHE PATENTSCHRIFT

(11) **EP 2 259 888 B1**
(45) Veröffentlichungstag und Bekanntmachung des Hinweises auf die Patenterteilung: **28.09.2016**
(21) Anmeldenummer: 09718081.4
(22) Anmeldetag: 05.03.2009
(51) Int. Cl.: B23B 31/16, B23Q 3/06, B25B 5/14

(54) **WERKZEUGMASCHINE, INSBESONDERE FÜR FELGENBEARBEITUNG**
MACHINE TOOL, IN PARTICULAR FOR RIM MACHINING
MACHINE-OUTIL, EN PARTICULIER POUR L'USINAGE DE JANTES

(30) Priorität: 07.03.2008 DE 102008014835
(43) Veröffentlichungstag der Anmeldung: 15.12.2010
(73) Patentinhaber: Chiron-Werke GmbH & Co. KG, 78532 Tuttlingen (DE)
(72) Erfinder: PRUST, Dirk, 78532 Tuttlingen (DE); WINKLER, Hans-Henning, 78532 Tuttlingen (DE); WINKLER, Torsten, 78573 Wurmlingen (DE)
(74) Vertreter: Witte, Weller & Partner Patentanwälte mbB
(86) Internationale Anmeldenummer: PCT/EP2009/001553
(87) Internationale Veröffentlichungsnummer: WO 2009/109384

(56) Entgegenhaltungen:
- EP-A- 0 290 896
- EP-A- 0 995 527
- WO-A-2006/003683
- US-A- 5 135 242
- US-A- 5 820 137

## Beschreibung

Die vorliegende Erfindung betrifft eine Werkzeugmaschine für die spanende Bearbeitung von Felgen, insbesondere zur Einbringung von Bohrungen und/oder Ausnehmungen in Felgen, mit einer Werkstückauflage zum Aufspannen der Felge, einem mindestens entlang einer Achse bewegbaren Werkzeughalter zum Halten eines Werkzeugs für die Bearbeitung der Felge und Werkstückhälteeineiten zum Festhalten der Felge während der Bearbeitung, wobei die Werkstückhalteeinheiten außerhalb der in aufgespanntem Zustand von der Felge überdeckten Werkstückauflagefläche der Werkstückauflage angeordnet sind und jeweils ein Halteelement zum Festhalten der Felge aufweisen, wobei die Halteelemente zum Übergreifen eines unteren Felgenhorns der zu bearbeitenden Felge ausgestaltet sind und jeweils im Wesentlichen_parallel zur Werkstückauflagefläche in Richtung auf die Felge, insbesondere in Richtung auf eine zentrale, senkrecht zur Werkstückauflagefläche verlaufende Felgenachse, zum Zentrieren und Festhalten der Felge verfahrbar sind.

Die Erfindung betrifft ferner ein entsprechendes Verfahren für die spanende Bearbeitung von Felgen, insbesondere zur Einbringung von Bohrungen und/oder Ausnehmungen in Felgen, bei dem die Felge auf einer Werkstückauflage aufgespannt wird, ein Werkzeug von einem mindestens entlang einer Achse verfahrbaren Werkzeughalter für die Bearbeitung der Felge gehalten wird und die Felge während der Bearbeitung von Werkstückhalteeinheiten festgehalten wird, wobei die Werkstückhalteeinheiten außerhalb der in aufgespanntem Zustand von der Felge überdeckten Werkstückauflagefläche der Werkstückauflage angeordnet sind und jeweils ein Halteelement zum Festhalten der Felge aufweisen, wobei die Halteelemente ein unteres Felgenhorn der zu bearbeitenden Felge während der Bearbeitung übergreifen und damit die Felge zentrieren und festhalten, wobei die Halteelemente dazu im Wesentlichen parallel zur Werkstückauflagefläche in Richtung auf die Felge, insbesondere in Richtung auf eine zentrale, senkrecht zur Werkstückauflägefläche verlaufende Felgenachse, verfahren werden.

Ferner betrifft die vorliegende Erfindung auch eine Werkstückhalteeiriheit zum Festhalten einer Felge während einer spanenden Bearbeitung mittels einer solchen Werkzeugmaschine.

Werkzeugmaschinen der eingangs genannten Art werden beispielsweise für die spanende Bearbeitung von Autofelgen, insbesondere zum Einbringen von Bohrungen für die spätere Ventildurchführung und die Radschrauben eingesetzt. Zum Festhalten einer Felge während der Bearbeitung wird die Felge bei einer bekannten Werkzeugmaschine so auf die Werkstückauflage, z.B. den Werkstücktisch oder eine Wiegenplatte einer Wiege, aufgelegt, dass das Nabenloch zum Zentrieren der Felge auf einen auf der Werkstückauflage vorgesehenen Dorn aufgesteckt wird und das untere Felgenhorn auf der Werkstückauflage aufliegt. Ferner sind auf der Werkstückauflage mehrere, beispielsweise drei, Kolben-Zylindereinheiten zum Festhalten der Felge vorgesehen. Diese Kolben-Zylindereinheiten sind rings um die Felge verteilt angeordnet und tragen jeweils als Halteelement einen Niederhalter.

Zum Festhalten der Felge müssen bei dieser Werkzeugmaschine zunächst die Positionen der Kolben-Zylindereinheiten an den Durchmesser der zu bearbeitenden Felge angepasst werden, wozu die Kolben-Zylindereinheiten entlang einer Verfahrschiene auf der Werkstückauflage verfahren und dann verankert werden müssen. Danach wird mittels eines Schwenkarms jeweils der Niederhalter an die herangeschwenkt und dann von oben auf untere Felgenhorn heruntergeklappt, wodurch die Felge von oben gegen die Werkstückauflage gepresst wird.

Abgesehen davon, dass bei der bekannten Werkzeugmaschine die Kolben-Zylindereinheiten mit den verschwenk- und umklappbaren Niederhaltern eine verhältnismäßig aufwändige Mechanik aufweisen, besteht weiter der Nachteil, dass diese Kolben-Zylindereinheiten unmittelbar den bei der Bearbeitung entstehenden Spänen und dem Kühlmittel ausgesetzt sind und somit schnell verschmutzen oder gar verschleißen. Ferner nehmen die Kolben-Zylindereinheiten viel Platz im Arbeitsraum ein, so dass nur Felgen bis zu einem maximalen Durchmesser bearbeitet werden können, da ansonsten der üblicherweise verwendete Roboterarm zum Wechseln der Felgen in und aus dem Arbeitsraum mit den Kolben-Zylindereinheiten kollidieren würde. Des Weiteren müssen bei Änderungen des Durchmessers der zu bearbeitenden Felgen die Positionen der Kolben-Zylindereinheiten neu eingestellt werden, und es sind mehrere Bewegungen mit unterschiedlichen Achsen erforderlich, um die Felge festzuhalten. Zum Zentrieren ist darüber hinaus ein Zentrierdorn zwingend erforderlich.

Ferner ist aus dem Stand der Technik die WO 2006/003683 A1 bekannt, welche eine Vorrichtung zum Festklemmen von maschinell zu bearbeitenden Teilen in zentrierter Position und eine diese Vorrichtung umfassende Werkzeugmaschine zeigt. Diese Vorrichtung weist drei voneinander in regelmäßigem Winkelabstand beabstandete Zentrierelemente auf, welche entlang einer vorgegebenen radialen Richtung auf einem Arbeitstisch verschiebbar gelagert sind. Aus der EP 0 290 896 A2 ist des Weiteren ein Spannfutter für Werkzeugmaschinen bekannt, welches mehrere, radial verschiebbare Spannmittel zum Spannen des Werkstücks aufweist. Eine weitere Spannvorrichtung zum Einspannen und Zentrieren von Aluminiumrädern gemäß dem Oberbegriff des Anspruchs 1 ist aus der US 5,820,137 bekannt.

Der vorliegenden Erfindung liegt deshalb die Aufgabe zugrunde, eine Werkzeugmaschine, ein Verfahren und eine dafür vorgesehene Werkstückhalteeinheit für die spanende Bearbeitung von Werkstücken anzugeben, die die genannten Nachteile vermeiden und die insbesondere für die Bearbeitung von Autofelgen geeignet sind, also bei denen die Werkstückhalteeinheiten mechanisch einfacher aufgebaut sind, geringerer Verschmutzung ausgesetzt sind und weniger Platz im Arbeitsraum beanspruchen.

Diese Aufgabe wird ausgehend von der eingangs genannten werkstückhalteeinheit gemäß Anspruch 1 dadurch gelöst, dass die Haltelemente eine im Bezug auf die Werkstückauflagefläche schräg verlaufende Klemmfläche aufweisen, die zum Festhalten und Zentrieren der zu bearbeitenden Felge gegen das untere Felgenhorn gedrückt werden und dadurch einen Druck sowohl in Richtung auf die Werkstückauflagefläche als auch in Richtung auf die zentrale Felgenachse ausüben.

Diese Aufgabe wird ferner ausgehend von einem eingangs genannten Verfahren gemäß Anspruch 10 dadurch gelöst, dass die Halteelemente zum Festhalten und zum Zentrieren der Felge mit einer in Bezug auf die Werkstückauflagefläche schräg verlaufenden Klemmfläche gegen das untere Felgenhorn gedrückt werden und dadurch ein Druck sowohl in Richtung auf die Werkstückauflagefläche als auch in Richtung auf die zentrale Felgenachse ausüben.

Durch diese Lösung wird die der Erfindung zugrunde liegende Aufgabe vollständig gelöst.

Der Erfindung liegt dabei die Erkenntnis zugrunde, die Felge bzw. das Werkstück nicht mehr nur von oben festzuhalten und gegen die Werkstückauflage zu drücken, sondern das Werkstück möglichst nahe an der Werkstückauflage, möglichst also am unteren Rand, festzuhalten. Ferner wird durch geeignet ausgestaltete Halteelemente gegen das Werkstück ein Druck sowohl in Richtung auf die zentrale Werkstückachse als auch in Richtung auf die Werkstückauflage ausgeübt und dadurch das Werkstück sowohl zu zentriert als auch festgehalten.

Die Halteelemente sind dabei auf die Ausgestaltung des zu bearbeitenden Werkstücks angepasst. Bei Autofelgen eignet sich zum Zentrieren und Festhalten insbesondere das untere Felgenhorn, das beim Auflegen der Felge unmittelbar auf die Werkstückauflage aufliegt, so dass die Werkstückhalteeinheiten dabei so ausgestaltet sein können, dass die Halteelemente in nur geringem Abstand über der Werkstückauflage liegen.

Im Gegensatz zu der bekannten Werkzeugmaschine reicht es also aus, wenn die Halteelemente jeweils in einer einzigen Richtung verfahrbar sind, nämlich in Richtung auf das Werkstück, bevorzugt in einer Ebene parallel zur Werkstückauflagefläche der Werkstückauflage. Die Werkstückhalteeinheiten können deshalb mechanisch deutlich einfacher aufgebaut sein, da keine Verschwenk- und Klappmechanismen wie bei den bei der bekannten Werkzeugmaschine verwendeten Kolben-Zylindereinheiten erforderlich sind. Es genügt somit eine einzige Verfahrbewegung der Halteeinheiten, um das Werkstück sicher zu zentrieren und festzuhalten. Dieser mechanisch sehr einfache Aufbau ermöglicht daher eine sehr exakte Positionierung, weshalb weitere Zentrier-Mittel nicht mehr unbedingt notwendig sind. Die Halteeinheiten können in ihrer Position so aufeinander abgestimmt werden, dass das Werkstück exakt und mittig in der Werkstückhalteeinheit eingespannt ist, ohne dass es eines größeren Einstell- bzw. Positionier-Aufwands bedarf. Ferner ist es auch nicht erforderlich, die Positionen der Werkstückhalteeinheiten auf der Werkstückauflage neu einzustellen, wenn sich der Durchmesser der Werkstücke ändert.

Die in Bezug auf die Werkstückaüfrägeflache schräg verlaufenden Klemmflächen der Halteelemente, welche zum Halten und Zentrieren der zu bearbeitenden Felge gegen das untere Felgenhorn gedrückt werden und dadurch einen Druck sowohl in Richtung auf die Werkstückauflagefläche als auch in Richtung auf die zentrale Felgenachse ausüben, ermöglichen nicht nur einen festen Sitz des Werkstücks in der Werkstückhalteeinheit, sondern vermindern auch ein Verkippen und tragen gleichzeitig positiv zur exakten Zentrierung des Werkstücks bei.

Die erfindungsgemäßen Werkstückhalteeinheiten beanspruchen auch deutlich weniger Platz im Arbeitsraum, was unter anderem die Bearbeitung von Werkstücken mit größerem Durchmesser (also beispielsweise größerer Autofelgen) bei gleich großem Arbeitsraum ermöglicht, da für die üblicherweise verwendeten Werkstückwechselroboter mehr Platz beim Werkstückwechsel im Arbeitsraum zur Verfügung steht.

Da die Werkstückhalteeinheiten erfindungsgemäß mechanisch deutlich einfacher ausgestaltet sind und weniger Platz im Arbeitsraum beanspruchen, sind sie auch deutlich geringerer Verschmutzung durch Späne und Kühlmittel ausgesetzt bzw. lassen sich deutlich einfacher gegen derartige Verschmutzungen schützen. In einer bevorzugten Ausgestaltung ist beispielsweise vorgesehen, dass die Werkstückhalteeinheiten im Wesentlichen in die Werkstückauflage integriert sind, nicht oder nur zum Teil aus der Werkstückauflage herausragen und die der Werkstückauflage abgewandte Oberseite des Werkstücks nicht überragen.

In einer weiteren Ausgestaltung der erfindungsgemäßen Werkzeugmaschine ist vorgesehen, dass die Halteelemente zum Eingreifen in eine Nut oder Übergreifen eines Flansches an dem Werkstück ausgestaltet sind, wobei die Halteelemente derart ausgestaltet und angeordnet sind, dass auf das Werkstück im aufgespannten Zustand durch die Halteelemente ein Anpressdruck auf das Werkstück in Richtung auf die Werkstückauflage ausgeübt wird. Dadurch wird auf besonders einfache Weise ein Festhalten und Zentrieren des Werkstücks erzielt. Wie oben bereits erwähnt, sind die Halteelemente natürlich an die an dem Werkstück angeordnete Nut bzw. den Flansch angepasst. Um mit derselben Werkzeugmaschine unterschiedliche Werkstücke, beispielsweise unterschiedliche Felgen, bearbeiten zu können, ist ferner bevorzugt vorgesehen, dass die Halteelemente austauschbar sind, so dass je nach Werkstück auch die geeigneten Halteelemente verwendet werden können.

In einer weiteren Ausgestaltung ist ferner erfindungsgemäß vorgesehen, dass auf der Werkstückauflage im Bereich der Werkstückauflagefläche, insbesondere im zentralen Bereich der Werkstückauflagefläche, Eingriffsmittel zum Eingriff in entsprechende Aufnahmen in der der Werkstückauflage zuweisenden Unterseite des Werkstücks vorgesehen sind. Diese Eingriffsmittel können beispielsweise einen Zentrierdorn aufweisen, der in eine zentrische Mittenbohrung des Werkstücks (bei einer Felge beispielsweise das Nabenloch) eingreift. Der Dorn kann beispielsweise ein Kegeldorn mit einem Übermaß gegenüber dem Bohrungsdurchmesser der Mittenbohrung sein, wodurch gleichzeitig auch eine Zentrierung des Werkstücks erreicht wird. Der kegelförmige Durchmesser des Dorns bietet ferner den Vorteil, dass dieser für unterschiedliche Größen von Mittenbohrungen bzw. Nabenlöchern einsetzbar ist. Durch sein leichtes Übermaß gegenüber dem Bohrungsdurchmesser wird mittels des Dorns automatisch direkt beim Aufsetzen des Werkstücks auf den Dorn eine sehr exakte Positionierung des Werkstücks innerhalb der Werkstückhalteeinheit erzielt.

Ferner ist bevorzugt vorgesehen, dass die Werkstückhalteeinheiten Antriebsmittel aufweisen zum voneinander unabhängigen Verfahren der Halteelemente, insbesondere hydraulische, pneumatische oder elektromotorische Antriebsmittel. Grundsätzlich können die Halteelemente der unterschiedlichen Werkstückhalteeinheiten unabhängig voneinander verfahren werden. Es kann jedoch auch vorgesehen sein, dass die Antriebsmittel der einzelnen Werkstückhalteeinheiten, insbesondere bei rotationssymmetrisch ausgestalteten Werkstücken, wie etwa Felgen, synchron zueinander verfahren werden, also gleichzeitig aus unterschiedlichen Richtungen von außen gegen das Werkstück drücken, und somit zusätzlich zur Zentrierung beitragen. Dies kann mechanisch oder elektronisch durch einen synchronisierten Antrieb aller Haltelemente erfolgen. Speziell in dem bereits beschriebenen Fall von rotationssymmetrischen Werkstücken kann durch diese Synchronisierung das Werkstück mittels der erfindungsgemäßen Halteelemente exakt mittig aufgespannt werden. Ein Einstellaufwand für die exakte Positionierung des Werkstücks fällt dabei nicht an. Auch eine Anpassung an unterschiedlich Werkstückdurchmesser kann schnell und auf sehr einfache Weise realisiert werden.

Zum Schutz der oben genannten Verschmutzungen ist ferner bevorzugt vorgesehen, dass die Werkstückhalteeinheiten die Antriebsmittel vor Verschmutzung schützende Abdeckungen aufweisen, beispielsweise ein umlaufendes Schutzband oder einen Deckel. Insbesondere wenn die Werkstückhalteeinheiten vollständig oder größtenteils in die Werkstückauflage integriert sind, lässt sich ein solcher Schutz durch einfache Mittel erreichen.

Der Werkzeughalter kann grundsätzlich beliebig angeordnet sein. Bevorzugt, insbesondere für die Bearbeitung von Felgen, ist der Werkzeughalter in der Werkstückauflage oder unterhalb der Werkstückauflage angeordnet zur Bearbeitung des Werkstücks aus Richtung der Werkstückauflage. Bei Felgen werden beispielsweise die Bohrungen für die Ventildurchführung und/oder die Durchführung der Nabenschrauben von unten in die Felge eingebracht. Das Werkzeug ist dabei beispielsweise nur entlang einer vertikal verlaufende Achse verfahrbar, während das Werkstück auf einer um eine horizontal verlaufende Querachse verschwenkbaren Wiege angeordnet sein kann, um dadurch auch schräg durch die Felge, beispielsweise durch eine Felgenspeiche, verlaufende Bohrungen anbringen zu können, wie dies meist für die Ventildurchführung erforderlich ist.

In einer vorteilhaften Ausgestaltung ist vorgesehen, dass die Werkstückhalteeinheiten Druckmessmittel aufweisen zum Messen, ob ein in Richtung auf eine zentrale Werkstückachse ausgeübter Druck einen Referenzdruck übersteigt, und zum Stoppen des Verfahrens des Halteelements der jeweiligen Werkstückhalteeinheit in Richtung auf das Werkstück, wenn der gemessene Druck den Referenzdruck überschreitet. Dies trägt zu einer optimalen Zentrierung und einem optimalen Festhalten des Werkstücks bei, ohne das Werkstück oder die Werkstückhalteeinheit zu beschädigen.

Es versteht sich, dass das beanspruchte Verfahren und die beanspruchte Werkstückhalteeinheit in gleicher oder ähnlicher Weise weitergebildet sein können, wie oben in Bezug auf die Werkzeugmaschine beschrieben und in den abhängigen Ansprüchen definiert ist. Ferner können die oben beschriebenen und weiter unten erläuterten Merkmale nicht nur in den beschriebenen Kombinationen sondern in jeder beliebigen Kombination erfindungsgemäß verwirklicht werden.

Die Erfindung wird nachfolgend anhand der Zeichnungen näher erläutert. Es zeigen:
- Fig. 1: in schematischer Seitenansicht eine Prinzipskizze einer erfindungsgemäßen Werkzeugmaschine,
- Fig. 2: eine Vorderansicht einer erfindungsgemäßen Werkzeugmaschine,
- Fig. 3: eine Schrägansicht einer Haltevorrichtung einer erfindungsgemäßen Werkzeugmaschine für die Felgenbearbeitung,
- Fig. 4: eine Draufsicht auf die in Fig. 3 gezeigte Haltevorrichtung,
- Fig. 5: eine Seitenansicht der in Fig. 3 gezeigten Haltevorrichtung, und
- Fig. 6: eine Detailansicht einer erfindungsgemäßen Werkstückhalteeinheit.

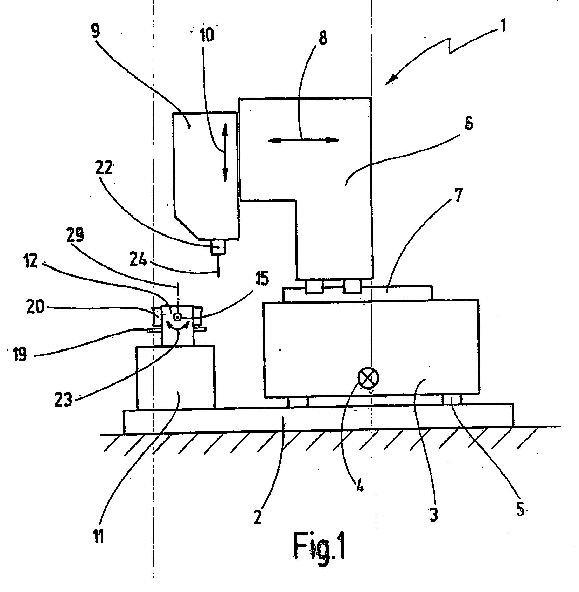

In Fig. 1 ist mit 1 eine Werkzeugmaschine gezeichnet, die in schematischer, nicht maßstabs- und detailgetreuer Darstellung gezeigt ist.

Die Werkzeugmaschine 1 weist auf ihrem Maschinenfuß 2 einen ersten Schlitten 3 auf, der in Richtung einer ersten Achse 4 auf Führungsschienen 5 verfahrbar ist. Auf dem ersten Schlitten 3 ist ein zweiter Schlitten 6 über Führungsschienen 7 in Richtung einer zweiten Achse 8 verfahrbar angeordnet.

An dem zweiten Schlitten 6 ist ein Spindelkopf 9 in Richtung einer dritten Achse 10 verfahrbar gelagert. In dem Spindelkopf 9 ist drehbar eine Arbeitsspindel 22 gelagert, die an ihrem unteren Ende ein Werkzeug 24 trägt.

Auf dem Maschinenfuß 2 ist ferner ein Werkstücktisch 11 vorgesehen, auf der vorliegend eine Wiegenvorrichtung 12 angeordnet ist, die ein schematisch angedeutetes Werkstück 20 trägt. Die Wiegenvorrichtung 12 ist um eine vorliegend parallel zur ersten Achse 4 verlaufende Querachse 15 in Pfeilrichtung 23 schwenkbar. Ferner ist bevorzugt das Werkstück um eine vierte, vorliegend parallel zur dritten Achse verlaufende Werkstückachse 29 drehbar.

Durch Verfahren des Spindelkopfes 9 und damit der Arbeitsspindel 22 in den drei Achsen 4, 8, 10 sowie durch Schwenken der Wiegenvorrichtung um die Querachse 15 und/oder Rotieren des Werkstücks um die Werkstückachse 29 kann das Werkstück 20 mit dem Werkzeug 23 an unterschiedlichen Stellen bearbeitet wird.

Weitere allgemeine Details und die grundsätzliche Funktionsweise einer solchen Werkzeugmaschine sind dem Fachmann allgemein bekannt und sollen deshalb an dieser Stelle nicht weiter ausgeführt werden.

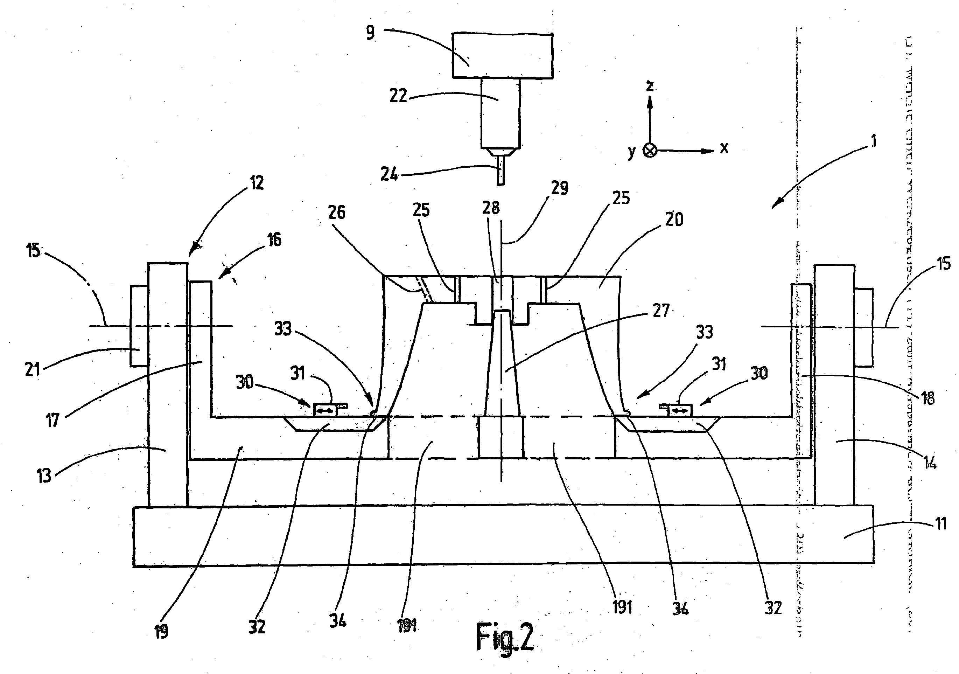

Fig. 2 zeigt eine detailiertere Vorderansicht einer erfindungsgemäßen Werkzeugmaschine 1, wobei die in Fig. 1 gezeigten Mittel zum Verfahren des Werkzeugs 24, also insbesondere die Schlitten und Führungsschienen, hier nicht gezeigt sind und nur das Werkzeug 24 selbst mit der Arbeitsspindel 22 und dem Spindelkopf 9 dargestellt sind. Die auf dem Werkstücktisch 11 angeordnete Wiegenvorrichtung 12 umfasst in an sich bekannter Weise zwei voneinander beabstandete Ständer 13, 14, zwischen denen um eine Schwenkachse 15 schwenkbar ein U-förmiger Halter 16 gelagert ist. Der U-förmige Halter 16 umfasst zwei Schenkel 17, 18, über die die Lagerung an den Ständern 13, 14 erfolgt und zwischen denen sich eine Wiegenplatte 19 (die vorliegend die Werkstückauflage darstellt) erstreckt, auf der das Werkstück 20 zur Bearbeitung aufgespannt wird. An dem Ständer 13 ist noch ein Antrieb 21 zu erkennen, über den der U-förmige Halter 16 um die Schwenkachse 15 aus der in Fig. 2 gezeigten horizontalen Stellung, grundsätzlich um 360°, geschwenkt werden kann.

Als Werkstück 20 ist vorliegend beispielhaft eine Autofelge 20 gezeigt, in die Bohrungen 25 für die spätere Durchführung der Radschrauben oder eine Ventilbohrung 26 mittels eines Bohrwerkzeugs 24 eingebracht werden können. Dazu wird bei dieser Ausgestaltung der Werkzeugmaschine 1 die Autofelge 20 um die Querachse 15 geschwenkt, so dass das Bohrwerkzeug 24 dann quasi von innen die gewünschten Bohrungen 25, 26 in die Autofelge 20 einbringt. Zur Einbringung der Bohrungen 25 für die Schraubendurchführung wird die Autofelge dazu bevorzugt um 180° geschwenkt. Um die im allgemeinen schräg in der Felge verlaufende Ventilbohrung 26 in die Autofelge 20 einzubringen, wird sie dagegen um weniger (oder mehr) als 180° verschwenkt, so dass auch die Einbringung dieser Ventilbohrung 26 das Bohrwerkzeug 24 nur durch einen Vorschub entlang der (in z-Richtung verlaufenden) dritten Achse 10 erfolgt.

Wie in Fig. 2 zu erkennen ist, weist die Wiegenplatte 19 im zentralen Bereich unterhalb des Werkstücks 20 Ausnehmung 191 auf, um das Werkstück 20 für die Bearbeitung mit dem Werkzeug 24 von innen her zugänglich zu machen.

Um das Werkstück 20 zentrisch auf dem U-förmigen Halter 16 aufzuspannen, ist auf der Wiegenplatte 19 vorliegend ein Zentrierdorn 27 vorgesehen, dessen Außendurchmesser an den Innendurchmesser einer zentrischen Bohrung 28 in dem Werkstück 20, vorliegend des Nabenlochs 28 der Felge 20, angepasst ist, so dass das Werkstück 20 mit der zentrischen Bohrung 28 auf den Dorn 27, beispielsweise einen Kegeldorn, aufgesteckt werden kann, beispielsweise mittels eines Roboterarms. Der Außendurchmesser des Dorns 27 ist insbesondere so ausgestaltet, dass das Werkstück 20 im auf den Dorn 27 aufgesteckten Zustand genau auf der Wiegenplatte 19 aufliegt, so dass sich das Werkstück 20 sowohl auf dem Dorn 27 als auch auf der Wiegenplatte 19 abstützt. Es sei allerdings erwähnt, dass bei Verwendung eines Dorns 27 eine derartige Abstützung auf der Wiegenplatte 19 nicht zwingend erforderlich ist. Ferner ist auch die Verwendung eines Dorns 27 nicht zwingend, da die nachfolgend beschriebenen Mittel zum Festhalten des Werkstücks 20 ebenfalls eine Zentrierung des Werkstücks 20 bewirken.

Zum Festhalten des Werkstücks 20 während der Bearbeitung sind erfindungsgemäß mindestens zwei, bevorzugt in die Wiegenplatte 19 integrierte Werkstückhalteeinheiten 30 vorgesehen. Diese weisen jeweils ein Halteelement 31 auf, welches relativ zu dem Haltekörper 32 der Werkstückhalteeinheit 30 in Richtung auf das Werkstück 20 verfahrbar ist, bevorzugt in einer Richtung, die parallel zur x-y-Ebene und senkrecht verläuft zur zentralen Werkstückachse 29, die vorliegend in z-Richtung verläuft.

Die Halteelemente 31 sind insbesondere so ausgestaltet, dass sie das Werkstück 20 während der Bearbeitung in zentrierter Lage festhalten. Dies gelingt, indem die Halteelemente 31 an die Gegebenheiten des Werkstücks 20 angepasst sind, beispielsweise an eine entsprechende Nut, in die die Halteelemente 31 eingreifen können, oder an einen entsprechenden Flansch, den die Halteelemente 31 übergreifen können. Die Halteelemente 31 sind dabei bevorzugt so ausgestaltet, dass sie sowohl einen Druck gegen das Werkstück 20 in Richtung auf die zentrale Werkstückachse 29, hier in x-Richtung, als auch in Richtung auf die Wiegenplatte 19, hier in z-Richtung, ausüben, um das Werkstück 20 sowohl zu zentrieren als auch sicher festzuhalten.

Bevorzugt ist der Dorn 27 so ausgestaltet, dass das Werkstück 20 in aufgestecktem, aber noch nicht von den Halteelementen 31 festgehaltenem Zustand mit seinem unteren Rand 33 noch nicht auf der Werkstückauflagefläche 34 der Wiegenplatte 19 aufliegt, sondern dort noch ein geringfügiger Luftspalt dazwischen liegt. Erst wenn die Halteelemente 31 dem unteren Rand 33, der bei dem vorliegend gezeigten Werkstück 20 etwas nach außen in der Form eines Flansches vorspringt und das untere Felgenhorn bildet, angreifen und dadurch das Werkstück 20 insgesamt in Richtung auf die Werkstückauflagefläche 34 drücken, liegt der untere Rand 33 auf der Werkstückauflagefläche 34 auf und ist damit fest auf der Wiegenplatte 19 zur Bearbeitung aufgespannt.

Es sei an dieser Stelle erwähnt, dass mit dem Begriff "Werkstückauflage", auf der zur Bearbeitung das Werkstüdk aufgespannt wird, je nach Ausgestaltung der Werkzeugmaschine sowohl der Werkstücktisch 11 als auch die Wiegenplatte 19 verstanden werden soll. Bei manchen Ausgestaltungen ist eine in den Figuren 1 und 2 gezeigte Wiegenvorrichtung 12 vorgesehen, bei der das Werkstück 20 dann auf der Wiegenplatte 19 aufgespannt wird. Bei anderen Werkzeugmaschinen hingegen ist, insbesondere wenn keine Verschwenkung des Werkstücks um die Querachse 15 zur Bearbeitung erforderlich ist, eine solche Wiegenvorrichtung 12 nicht vorhanden, also auch keine Wiegenplatte 19, so dass das Werkstück 20 dann direkt auf dem Werkstücktisch 11 aufgespannt wird, in den dann bevorzugt die Werkstückhalteeinheiten 30 integriert sind.

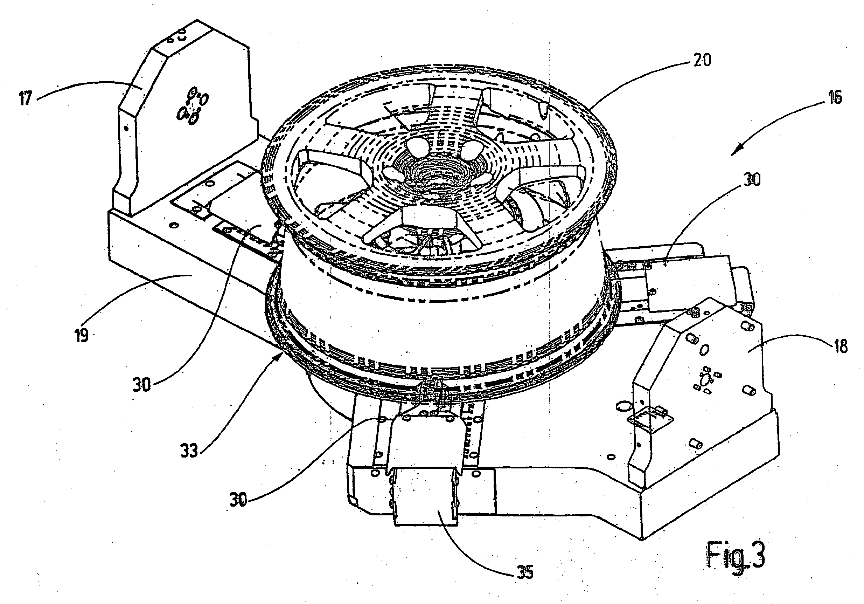

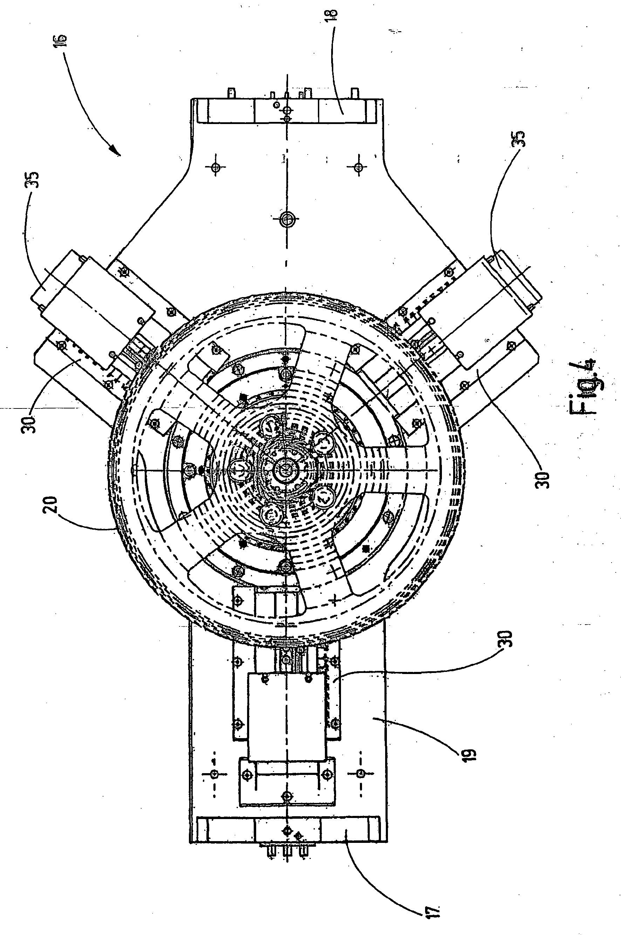

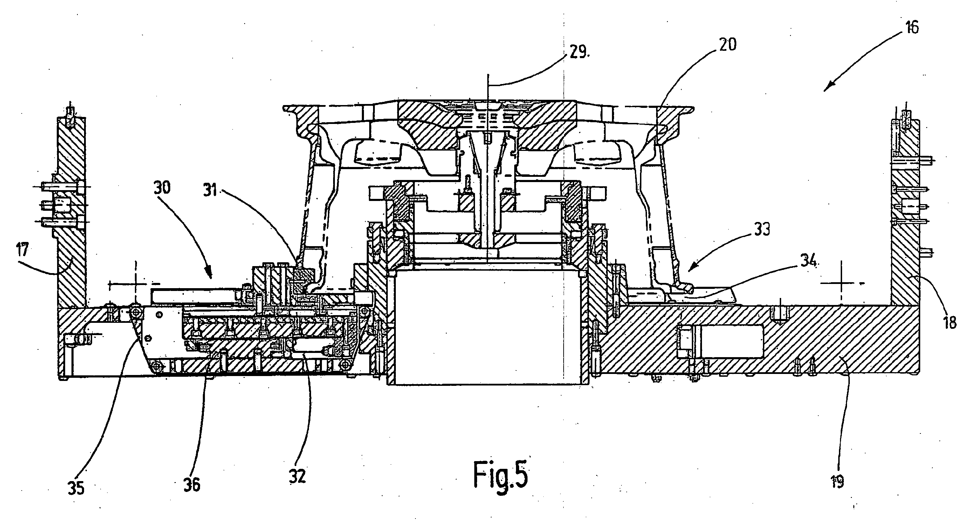

Detailliertere Darstellungen des U-förmigen Halters 16 einer erfindungsgemäßen, für die Felgenbearbeitung vorgesehenen Werkzeugmaschine jeweils mit einer aufgespannten Felge 20 sind in den Figuren 3 bis 5 gezeigt. Dabei zeigt Fig. 3 eine Schrägansicht des U-förmigen Halters 16, Fig. 4 eine Draufsicht auf den U-förmigen Halter 16 und Fig. 5 eine seitliche Schnittansicht des U-förmigen Halters 16. Wie in den Fig. 3 und 4 erkennbar ist, sind bei dieser Ausgestaltung insgesamt drei Werkstückhalteeinheiten 30 vorgesehen, die um die Felge 20 herum, bevorzugt jeweils um 120° versetzt zueinander, angeordnet sind. Diese Werkstückhalteeinheiten 30 sind so angeordnet, dass die Halteelemente 31 jeweils in einer Richtung auf die Felge 20 hin verfahrbar sind, also in einer Richtung, die parallel zur werkstückseitigen Oberfläche der Wiegenplatte 19 (also parallel zur x-y-Ebene) und senkrecht zur zentralen Werkstückachse 29 verläuft, so dass das Haltelement jeweils den unteren Rand 32 der Felge 20 möglichst senkrecht trifft. Insbesondere in Fig. 5 ist ferner erkennbar, wie in geklemmtem Zustand das Halteelement 31 das untere Felgenhorn 33 der Felge 20 übergreift und dadurch die Felge 20 insgesamt nach unten in Richtung auf die Werkstückauflagefläche 34 der Wiegenplatte 19 anpresst.

Wie ferner aus den Figuren 2 bis 5 erkennbar ist, nehmen die Werkstückhalteeinheiten 30 kaum Platz im Arbeitsraum ein, da sie größtenteils in die Wiegenplatte 19 integriert sind. Dadurch können, bei ansonsten gleich großer Wiegenvorrichtung 16, Felgen mit größerem Außendurchmesser bearbeitet werden als mit der bekannten Werkzeugmaschine, bei der die Werkstückhalteeinheiten deutlich mehr Platz im Arbeitsraum beanspruchen, da sie seitlich neben der Felge 20 angeordnet sind und diese überragen, um mittels schwenk- und kippbarer Niederhalter die Felge 20 gegen die Wiegenplatte 19 zu drücken. Bei der erfindungsgemäßen Werkzeugmaschine steht auch deutlich mehr Platz für die Beladung bzw. Entladung der Felgen durch einen Roboterarm zur Verfügung.

Dadurch, dass die Werkstückhalteeinheiten 30 erfindungsgemäß in die Wiegenplatte 19 integriert sind, sind diese auch in deutlich geringerem Maße einer Verschmutzung durch Kühlmittel und Späne ausgesetzt. Die Werkstückhalteeinheiten 30 lassen sich auch deutlich besser gegen derartige Verschmutzung schützen. Beilspielsweise können an der Oberseite Abdeckbleche vorgesehen sein, die den größten Teil der Werkstückhalteeinheit, insbesondere, die im Innern liegenden Antriebsmittel, gegen derartige Verschmutzungen weitgehend schützen. Bei der in den Figuren 3 bis 5 gezeigten Ausgestaltung ist dafür jeweils ein umlaufendes Abdeckband 35 vorgesehen, das um den Haltekörper 32 verläuft und die im Innern des Haltekörpers 32 liegenden Antriebsmittel 36 zum Verfahren der Halteelemente 31 nahezu vollständig abdeckt und somit gegen Verschmutzungen schützt.

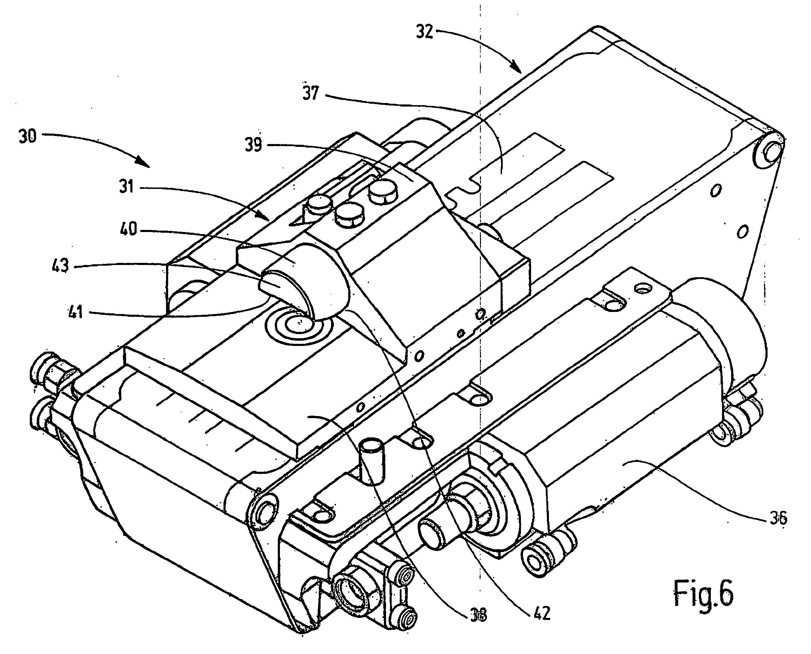

Eine Ausgestaltung einer bei der erfindungsgemäßen Werkzeugmaschine eingesetzten Werkstückhalteeinheit 30 ist in Fig. 6 gezeigt. Zu erkennen sind dort die seitlich an dem Haltekörper 32 angeordneten Antriebsmittel, vorliegend zwei Druckluftzylinder, mit denen das Halteelement 31 entlang einer im Innern des Haltekörpers 32 liegenden Verfahrschiene 37 verfahren werden kann. Es versteht sich, dass natürlich auch andere Antriebsmittel zum Einsatz kommen können, beispielsweise Elektromotoren oder Hydraulikzylinder, und dass grundsätzlich auch nur ein Antriebsmittel je Werkstückhalteeinheit 30 ausreicht. Das in den Figuren 2 bis 4 gezeigte Abdeckband 35 ist in Fig. 6 nicht gezeigt.

Das Halteelement 31 umfasst eine Verfahrplatte 38, die auf der Verfahrschiene 37 verfahrbar angeordnet ist und auf ihrer Oberseite ein Tragteil 39 aufweist, an dessen einem, dem Werkstück zuweisenden Ende, ein Klemmteil 40 angebracht ist. Dieses Klemmteil 40 steht bei festgeklemmtem Werkstück 20 mit diesem in Berührung und übt den Druck zum zentrierten Festklemmen des Werkstücks 20 auf die berührte Fläche des Werkstücks 20 auf. Das Klemmteil 40 ist deshalb an die berührte Fläche des Werkstücks 20 angepasst, um diesen Druck optimal aufzubringen, ohne das Werkstück zu beschädigen. Beispielsweise ist das Klemmteil 40 aus Kunststoffmaterial, beispielsweise einem Hartgummi, gebildet und ist bevorzugt austauschbar an dem Tragteil 39 angebracht, um es bei Verschleiß austauschen zu können oder es gegen ein anderes Klemmteil austauschen zu können, wenn das von der Werkzeugmaschine bearbeitete Werkstück wechselt und ebenfalls anders ausgestaltet ist.

Bei der gezeigten Ausgestaltung ist an der Unterseite des Klemmteils 40 eine schräg verlaufende Klemmfläche 41 vorgesehen, die unterhalb einer oberen Anschlagfläche 43 beginnt und zum Tragteil 39 hin in eine untere Anschlagfläche 42 mündet. Die Klemmfläche 41 und bevorzugt auch die obere und untere Anschlagflächen 42, 43 berühren bei aufgespannter und festgeklemmter Felge 20 das untere Felgenhorn 33 der Felge 20, wobei die Klemmfläche 41 insbesondere einen Druck von oben auf das untere Felgenhorn aufbringt und die an der oberen Vorderkante des Klemmteils 40 angeordnete obere Anschlagfläche 43 und/oder die untere Anschlagfläche 42 einen Druck im Wesentlichen in Richtung auf die zentrale Werkstückachse 29 aufbringen.

Die Felge 20 wird dadurch sicher verklemmt, während der Bearbeitung festgehalten und kann somit um die Querachse 15 verschwenkt werden.

Bevorzugt ist ferner in der Werkstückhalteeinheit 30 ein Druckmessmittel, beispielsweise ein Staudruckmelder (nicht gezeigt), vorgesehen, das dazu dient, den in Richtung auf das Werkstück ausgeübten Druck zu messen, insbesondere daraufhin, ob dieser gemessene Druck einen Referenzdruck übersteigt. Wenn dies festgestellt wird, wird das Halteelement 31 nicht weiter in Richtung auf das Werkstück verfahren, um Beschädigungen des Werkstücks oder der Werkstückhalteeinheit zu vermeiden.

Bevorzugt werden die Werkstückhalteeinheiten durch eine zentrale Steuereinheit gesteuert. Insbesondere werden die Halteelemente 31 gleichzeitig und synchron verfahren, so dass das Werkstück synchron aus unterschiedlichen Richtungen mit Druck beaufschlag wird. Es kann jedoch auch vorgesehen sein, dass die Halteelemente 31 separat einzeln angesteuert und einzeln verfahren werden, was insbesondere bei nicht symmetrisch ausgestalteten Werkstücken von Vorteil sein kann.

Die Erfindung ist nicht auf die gezeigten Ausgestaltungen beschränkt. Insbesondere hinsichtlich der Anzahl, Anordnung und Ausgestaltung der Werkstückhalteeinheiten sind diverse Abwandlungen denkbar. Diverse Modifikationen geben sich insbesondere aufgrund der Ausgestaltung der zu bearbeitenden Werkstücke. Auch die Bearbeitung der Werkstücke muss nicht zwingend von oben und/oder mit Hilfe einer in Fig. 1 schematisch gezeigten sogenannten Fahrständermaschine erfolgen. Die Bearbeitung könnte grundsätzlich gleichermaßen auch von unten und/oder von der Seite erfolgen, sofern das Werkstück und/oder die sonstigen Gegebenheiten der Werkzeugmaschine dies erlauben oder erforderlich machen. Beispielsweise könnte die Werkzeugspindel aus seitlicher Richtung an das Werkstück angreifen, und das Werkstück kann dabei an seinen Seiten bearbeitet werden, oder zur Bearbeitung der Unter- oder Oberseite um 90° verschwenkt werden.

Der Werkzeughalter kann grundsätzlich auch unterhalb des Werkstück 20 angeordnet sein, also beispielsweise auf dem Maschinenfuß 2, auf dem Werkstücktisch 11 oder in den Werkzeugtisch integriert, um das Werkstück 20 von unten her zu bearbeiten.

Ferner können zusätzlich oder alternativ zu den in den Ausführungsbeispielen gezeigten Achsen weitere Achsen vorgesehen sein. Je nach Werkstück und erforderlicher Bearbeitung kann es von Vorteil sein, das Werkstück um eine in z-Richtung verlaufende Achse drehbar aufzuspannen, beispielsweise auf einem Werkstückdrehtisch. Die Wiegenvorrichtung kann auch vollständig entfallen und das Werkstück dann direkt auf dem Werkstücktisch aufgespannt werden. Ferner kann auch grundsätzlich vorgesehen sein, dass das Werkstück in x-, y- und/oder z-Richtung verfahrbar angeordnet ist, während das Werkzeug während der Bearbeitung feststeht oder nur entlang einzelner Achsen verfahrbar angeordnet ist.

Die erfindungsgemäße Werkzeugmaschine eignet sich insbesondere zur Bearbeitung von Felgen, die automatisch in die Werkzeugmaschine geladen und aus dieser entladen werden. Es können jedoch genauso gut auch andere Werkstücke mit einer solchen Werkzeugmaschine bearbeitet werden, insbesondere wenn die einzelnen Werkstücke in ihrem Durchmesser variieren, ohne dass die gesamte Werkzeugmaschine und insbesondere die Wiegenvorrichtung vergrößert oder abgewandelt werden muss. So kann beispielsweise die erfindungsgemäße Werkzeugmaschine für Autofelgen mit einem Durchmesser von bis zu 30" eingesetzt werden, während die bekannte Werkzeugmaschine bei gleichen Abmessungen nur Autofelgen bis zu einem Durchmesser von 24" bearbeiten kann.

## Patentansprüche

1. Werkstückhalteeinheit (30) zum Festhalten einer Felge (20) während der spanenden Bearbeitung der Felge (20) mittels einer Werkzeugmaschine (1), welche eine Werkstückauflage (19) zum Aufspannen der Felge (20) und einen mindestens entlang einer Achse bewegbaren Werkzeughalter (22) zum Halten eines Werkzeugs (24) für die Bearbeitung der Felge (20) aufweist, wobei die Werkstückhalteeinheit (30) außerhalb der in aufgespanntem Zustand von der Felge (20) überdeckten Werkstückauflagefläche (34) der Werkstückauflage (19) angeordnet ist und ein Halteelement (31) zum Festhalten der Felge (20) aufweist, wobei das Halteelement (31) zum Übergreifen eines unteren Felgenhorns (33) der zu bearbeitenden Felge (20) ausgestaltet ist und im Wesentlichen parallel zur Werkstückauflagefläche (34) in Richtung auf die Felge (20), insbesondere in Richtung auf eine zentrale, senkrecht zur Werkstückauflagefläche (34) verlaufende Felgenachse (29), zum Zentrieren und Festhalten der Felge (20) verfahrbar ist,
**dadurch gekennzeichnet, dass** das Halteelement (31) eine in Bezug auf die Werkstückauflagefläche (34) schräg verlaufende Klemmfläche (41) aufweist, die zum Festhalten und Zentrieren der zu bearbeitenden Felge (20) gegen das untere Felgenhorn (33) gedrückt wird und dadurch einen Druck sowohl in Richtung auf die Werkstückauflagefläche (34) als auch in Richtung auf die zentrale Felgenachse (29) ausübt.

2. Werkzeugmaschine (1) für die spanende Bearbeitung von Felgen (20), insbesondere zur Einbringung von Bohrungen (25, 26) und/oder Ausnehmungen in Felgen (20), mit einer Werkstückauflage (19) zum Aufspannen der Felge (20), einem mindestens entlang einer Achse bewegbaren Werkzeughalter (22) zum Halten eines Werkzeugs (24) für die Bearbeitung der Felge (20) und Werkstückhalteeinheiten (30) gemäß Anspruch 1.

3. Werkzeugmaschine nach Anspruch 2, **dadurch gekennzeichnet, dass** die Werkstückhalteeinheiten (30) im Wesentlichen in der Werkstückauflage (19) integriert sind, nicht oder nur zum Teil aus der Werkstückauflage (19) herausragen und die der Werkstückauflage (19) abgewandte Oberseite der Felge (20) nicht überragen.

4. Werkzeugmaschine nach Anspruch 2 oder 3, **dadurch gekennzeichnet, dass** die Halteelemente (31) zum Eingreifen in eine Nut oder Übergreifen eines Flansches (33) an der Felge (20) ausgestaltet sind, wobei die Halteelemente (31) derart ausgestaltet und angeordnet sind, dass auf die Felge (20) im aufgespannten Zustand durch die Halteelemente (31) ein Anpressdruck in Richtung auf die Werkstückauflage (19) ausgeübt wird.

5. Werkzeugmaschine nach einem der Ansprüche 2 bis 4, **dadurch gekennzeichnet, dass** auf der Werkstückauflage (19) im Bereich der Werkstückauflagefläche (34), insbesondere im zentralen Bereich der Werkstückauflagefläche (34), Eingriffsmittel (27) zum Eingriff in entsprechende Aufnahmen (28) in der die Werkstückauflage (19) zuweisenden Unterseite der Felge (20) vorgesehen sind.

6. Werkzeugmaschine nach einem der Ansprüche 2 bis 5, **dadurch gekennzeichnet, dass** die Werkstückhalteeinheiten (30) Antriebsmittel (36) aufweisen zum Verfahren der Halteelemente (31), insbesondere hydraulische, pneumatische oder elektromotorische Antriebsmittel.

7. Werkzeugmaschine nach Anspruch 6, **dadurch gekennzeichnet, dass** die Werkstückhalteeinheiten (30) die Antriebsmittel (36) vor Verschmutzung schützende Abdeckungen (35) aufweisen.

8. Werkzeugmaschine nach einem der Ansprüche 2 bis 7, **dadurch gekennzeichnet, dass** der Werkzeughalter (22) in der Werkstückauflage (19) oder unterhalb der Werkstückauflage (19) angeordnet ist zur Bearbeitung der Felge (20) aus Richtung der Werkstückauflage (19).

9. Werkzeugmaschine nach einem der Ansprüche 2 bis 8, **dadurch gekennzeichnet, dass** die Werkstückhalteeinheiten (30) Druckmessmittel aufweisen zum Messen, ob ein in Richtung auf die zentrale Felgenachse (29) ausgeübter Druck einen Referenzdruck übersteigt, und zum Stoppen des Verfahrens des Halteelements (31) der jeweiligen Werkstückhalteeinheit (30) in Richtung auf die Felge (20), wenn der gemessene Druck den Referenzdruck überschreitet.

10. Verfahren für die spanende Verarbeitung von Felgen (20), insbesondere zur Einbringung von Bohrungen (25, 26) und/oder Ausnehmungen in Felgen (20), bei dem die Felge (20) auf einer Werkstückauflage (19) aufgespannt wird, ein Werkzeug (24) von einem mindestens entlang einer Achse verfahrbaren Werkzeughalter (22) für die Bearbeitung der Felge (20) gehalten wird und die Felge (20) während der Bearbeitung von Werkstückhalteeinheiten (30) festgehalten wird, wobei die Werkstückhalteeinheiten (30) außerhalb der in aufgespanntem Zustand von der Felge (20) überdeckten Werkstückauflagefläche (34) der Werkstückauflage (19) angeordnet sind und jeweils ein Halteelement (31) zum Festhalten der Felge(20) aufweisen, wobei die Halteelemente (31) ein unteres Felgenhorn (33) der zu bearbeitenden Felge (20) während der Bearbeitung übergreifen und damit die Felge (20) zentrieren und festgehalten, wobei die Halteelemente (31) dazu im Wesentlichen parallel zur Werkstückauflagefläche (34) in Richtung auf die Felge (20), insbesondere in Richtung auf eine zentrale, senkrecht zur Werkstückauflagefläche (34) verlaufende Felgenachse (29), verfahren werden
**dadurch gekennzeichnet, dass** die Halteelemente (31) zum Festhalten und zum Zentrieren der Felge (20) mit einer in Bezug auf die Werkstückauflagefläche (34) schräg verlaufenden Klemmfläche (41) gegen das untere Felgenhorn (33) gedrückt werden und dadurch einen Druck sowohl in Richtung auf die Werkstückauflagefläche (34) als auch in Richtung auf die zentrale Felgenachse (29) ausüben.

## Claims

1. A workpiece holding unit (30) for fixing a rim (20) during the stock-removing machining of the rim (20) by means of a machine tool (1) that comprises a tool table (11) for mounting the rim (20) and a tool holder (22), which can be moved at least along one axis, for holding a tool (24) for machining the rim (20), wherein the workpiece holding unit (30) is arranged outside the workpiece support surface (34), which is covered by the rim (20) in the mounted state, and comprises a holding element (31) for fixing the rim (20), wherein the holding element (31) is adapted to overlap a lower rim flange (33) of the rim (20) to be machined, and wherein the holding element (31), for the purpose of centering and fixing the rim (20), is adapted to be moved, substantially parallel to the workpiece support surface (34), in a direction of the rim (20), in particular in a direction of a central rim axis (29) which runs perpendicular to the workpiece support surface (34),
**characterized in that** the holding element (31) comprises a clamping surface (41) that runs obliquely in relation to the workpiece support surface (34) and that is pressed against the lower rim flange (33) for the purpose of fixing and centering the rim (20) to be machined, and thereby exerts a pressure both in the direction of the workpiece support surface (34) and in the direction of the central rim axis (29).

2. A machine tool (1) for stock-removing machining of rims (20), in particular for applying drilled holes (25, 26) and/or recesses in rims (20), having a workpiece support (19) for mounting the rim (20), a tool holder (22), which can be moved at least along one axis, for holding a tool (24) for machining the rim (20), and workpiece holding units (30) according to claim 1.

3. The machine tool as claimed in claim 2, **characterized in that** the workpiece holding units (30) are integrated substantially in the workpiece support (19), do not project out of the workpiece support (19), or project only partially therefrom, and do not project beyond the top side of the rim (20) that faces away from the workpiece support (19).

4. The machine tool as claimed in claim 2 or 3, **characterized in that** the holding elements (31) are adapted to engage in a groove or to overlap a flange (33) on the rim (20), wherein the holding elements (31) are designed and arranged in such a way that a contact pressure, in the direction of the workpiece support (19), is exerted upon the rim (20) in the mounted state by the holding elements (31).

5. The machine tool as claimed in any of claims 2 to 4, **characterized in that** engagement means (27), for engaging in corresponding receivers (28) in the underside of the rim (20) that faces towards the workpiece support (19), are provided on the workpiece support (19), in the region of the workpiece support surface (34), in particular in the central region of the workpiece support surface (34).

6. The machine tool as claimed in any of claims 2 to 5, **characterized in that** the workpiece holding units (30) have drive means (36), in particular hydraulic, pneumatic or electromotive drive means, for moving the holding elements (31).

7. The machine tool as claimed in claim 6, **characterized in that** the workpiece holding units (30) have covers (35), which protect the drive means (36) against dirt accumulation.

8. The machine tool as claimed in any of claims 2 to 7, **characterized in that** the tool holder (22) is arranged in the workpiece support (19), or beneath the workpiece support (19), for the purpose of machining the rim (20) from the direction of the workpiece support (19).

9. The machine tool as claimed in any of claims 2 to 8, **characterized in that** the workpiece holding units (30) have pressure measuring means, for measuring whether a pressure exerted in the direction of the central rim axis (29) exceeds a reference pressure, and for stopping the holding element (31) of the respective workpiece holding unit (30) from being moved in the direction of the rim (20) if the measured pressure exceeds the reference pressure.

10. A method for the stock-removing machining of rims (20), in particular for applying drilled holes (25, 26) and/or recesses in rims (20), wherein the rim (20) is mounted on a workpiece support (19), for machining the rim (20) a tool (24) is held by a tool holder (22) that can be moved at least along one axis, and during the machining the rim (20) is fixed by workpiece holding units (30), wherein the workpiece holding units (30) are arranged outside the workpiece support surface (34) of the workpiece support (19), which is covered by the rim (20) in the mounted state, and each of the workpiece holding units (30) comprising a holding element (31) for fixing the rim (20), wherein the holding elements (31) overlap during machining a lower rim flange (33) of the rim (20) to be machined and thereby center and fix the rim (20), wherein the holding elements (31) are thereto moved, substantially parallel to the workpiece support surface (34), in a direction of the rim (20), in particular in a direction of a central rim axis (29) which runs perpendicular to the workpiece support surface (34),
**characterized in that** the holding elements (31) are pressed with a clamping surface (41) that runs obliquely in relation to the workpiece support surface (34) against the lower rim flange (33) for the purpose of fixing and centering the rim (20) to be machined, and thereby exert a pressure both in the direction of the workpiece support surface (34) and in the direction of the central rim axis (29).

## Revendications

1. Unité porte-pièce (30) pour la fixation d'une jante (20) pendant l'usinage par enlèvement de copeaux de la jante (20) au moyen d'une machine-outil (1), qui présente un support de pièce (19) pour immobiliser la jante (20) et au moins un porte-outil (22) pouvant être déplacé le long d'un axe pour retenir un outil (24) pour l'usinage de la jante (20), l'unité porte-pièce (30) étant disposée à l'extérieur de la surface de support de pièce (34) du support de pièce (19) recouverte par la jante (20) dans l'état immobilisé et présentant un élément de retenue (31) pour fixer la jante (20), l'élément de retenue (31) étant configuré pour venir en prise par le dessus avec un rebord de jante inférieur (33) de la jante à usiner (20) et pouvant être déplacé essentiellement parallèlement à la surface de support de pièce (34) dans la direction de la jante (20), en particulier dans la direction d'un axe de jante central (29) s'étendant perpendiculairement à la surface de support de pièce (34), en vue du centrage et de la fixation de la jante (20),
**caractérisée en ce que** l'élément de retenue (31) présente une surface de serrage (41) s'étendant obliquement par rapport à la surface de support de pièce (34), laquelle est pressée contre le rebord de jante inférieur (33) pour fixer et centrer la jante à usiner (20) et exerce de ce fait une pression à la fois dans la direction de la surface de support de pièce (34) et également dans la direction de l'axe central de la jante (29).

2. Machine-outil (1) pour l'usinage de jantes (20) par enlèvement de copeaux, en particulier pour réaliser des alésages (25, 26) et/ou des évidements dans des jantes (20), comprenant un support de pièce (19) pour immobiliser la jante (20), un porte-outil (22) pouvant être déplacé au moins le long d'un axe pour retenir un outil (24) pour usiner la jante (20) et des unités porte-pièces (30) selon la revendication 1.

3. Machine-outil selon la revendication 2, **caractérisée en ce que** les unités porte-pièces (30) sont intégrées essentiellement dans le support de pièce (19), ne font pas saillie ou seulement en partie hors du support de pièce (19) et ne dépassent pas du côté de la jante (20) opposé au support de pièce (19).

4. Machine-outil selon la revendication 2 ou 3, **caractérisée en ce que** les éléments de retenue (31) sont configurés pour s'engager dans une rainure ou pour venir en prise par-dessus avec une bride (33) au niveau de la jante (20), les éléments de retenue (31) étant configurés et disposés de telle sorte qu'une pression de pressage soit exercée sur la jante (20) dans la direction du support de pièce (19) dans l'état immobilisé par les éléments de retenue (31).

5. Machine-outil selon l'une quelconque des revendications 2 à 4, **caractérisée en ce que** des moyens d'engagement (27) pour l'engagement dans des logements correspondants (28) dans le côté inférieur de la jante (20) tourné vers le support de pièce (19) sont prévus sur le support de pièce (19) dans la région de la surface de support de pièce (34), en particulier dans la région centrale de la surface de support de pièce (34).

6. Machine-outil selon l'une quelconque des revendications 2 à 5, **caractérisée en ce que** les unités porte-pièce (30) présentent des moyens d'entraînement (36) pour déplacer les éléments de retenue (31), en particulier des moyens d'entraînement hydrauliques, pneumatiques ou à moteur électrique.

7. Machine-outil selon la revendication 6, **caractérisée en ce que** les unités porte-pièces (30) présentent des recouvrements (35) protégeant les moyens d'entraînement (36) contre des salissures.

8. Machine-outil selon l'une quelconque des revendications 2 à 7, **caractérisée en ce que** le porte-outil (22) est disposé dans le support de pièce (19) ou en dessous du support de pièce (19) pour usiner la jante (20) depuis la direction du support de pièce (19).

9. Machine-outil selon l'une quelconque des revendications 2 à 8, **caractérisée en ce que** les unités porte-pièces (30) présentent des moyens de mesure de pression pour mesurer si une pression exercée dans la direction de l'axe central de la jante (29) dépasse une pression de référence et pour arrêter le déplacement de l'élément de retenue (31) de l'unité porte-pièce respective (30) dans la direction de la jante (20) lorsque la pression mesurée dépasse la pression de référence.

10. Procédé pour l'usinage de jantes (20) par enlèvement de copeaux, en particulier pour réaliser des alésages (25, 26) et/ou des évidements dans des jantes (20), dans lequel la jante (20) est immobilisée sur un support de pièce (19), un outil (24) est retenu par un porte-outil (22) pouvant être déplacé au moins le long d'un axe pour l'usinage de la jante (20) et la jante (20), pendant l'usinage, est fixée par des unités porte-pièces (30), les unités porte-pièces (30) étant disposées à l'extérieur de la surface de support de pièce (34) du support de pièce (19) recouverte par la jante (20) dans l'état immobilisé et présentant à chaque fois un élément de retenue (31) pour fixer la jante (20), les éléments de retenue (31) venant en prise par le dessus avec un rebord de jante inférieur (33) de la jante (20) à usiner pendant l'usinage et centrant et fixant ainsi la jante (20), les éléments de retenue (31) étant à cet effet déplacés essentiellement parallèlement à la surface de support de pièce (34) dans la direction de la jante (20), en particulier dans la direction d'un axe central de la jante (29) s'étendant perpendiculairement à la surface de support de pièce (34),
**caractérisé en ce que** les éléments de retenue (31) pour fixer et centrer la jante (20) sont pressés contre le rebord de jante inférieur (33) avec une surface de serrage (41) s'étendant obliquement par rapport à la surface de support de pièce (34) et de ce fait exercent une pression à la fois dans la direction de la surface de support de pièce (34) et également dans la direction de l'axe central de la jante (29).
